# FASCICULE DE BREVET EUROPEEN

(11) **EP 1 678 337 B1**
(45) Date de publication et mention de la délivrance du brevet: **07.07.2010**
(21) Numéro de dépôt: 04789660.0
(22) Date de dépôt: 30.10.2004
(51) Int. Cl.: C22B 3/44, C01G 37/02, A62D 3/00, C02F 1/62, C22B 34/32

(54) **PROCÉDÉ DE DÉCONTAMINATION D'UN MATÉRIAU RÉFRACTAIRE CONTENANT DU CHROME HEXAVALENT**
VERFAHREN ZUR DEKONTAMINIERUNG HEXAVALENTES CHROM ENTHALTENDER FEUERFESTMATERIALIEN
METHOD OF DECONTAMINATING REFRACTORY MATERIAL CONTAINING HEXAVALENT CHROME

(30) Priorité: 31.10.2003 BE 200300584; 16.09.2004 EP 04077573
(43) Date de publication de la demande: 12.07.2006
(73) Titulaire: Institut National Interuniversitaire des Silicates, Sols et Materiaux (I.N.I.S.Ma), a.s.b.l., 7000 Mons (BE); Centre de Recherche de l'Industrie Belge de la Ceramique (C.R.I.B.C.), 7000 Mons (BE)
(72) Inventeur: DESCAMP, Philippe, B-6120 Ham Sur Heure (BE); LUCION, Thierry, B-1030 Bruxelles (BE); TIRLOCQ, Jacques, B-7331 Baudour (BE); AUVRAY, Jean-Michel, F-59600 Gognies-Chaussée (FR)
(74) Mandataire: Callewaert, Jean
(86) Numéro de dépôt international: PCT/BE2004/000155
(87) Numéro de publication internationale: WO 2005/042791

(56) Documents cités:
- DE-A- 10 000 709
- US-A- 4 139 460
- DATABASE WPI Section Ch, Week 198236 Derwent Publications Ltd., London, GB; Class D15, AN 1982-76360E XP002288287 & SU 881 004 A (MOSC NOBLE METALS) 17 novembre 1981 (1981-11-17)
- DATABASE WPI Section Ch, Week 197824 Derwent Publications Ltd., London, GB; Class E31, AN 1978-42749A XP002288288 & JP 53 048906 A (DOWA MINING CO LTD) 2 mai 1978 (1978-05-02)
- DATABASE WPI Section Ch, Week 198110 Derwent Publications Ltd., London, GB; Class E31, AN 1981-16302D XP002288290 & JP 55 167133 A (AGENCY OF IND SCI & TECHNOLOGY) 26 décembre 1980 (1980-12-26)
- DATABASE WPI Section Ch, Week 199937 Derwent Publications Ltd., London, GB; Class L02, AN 1999-432809 XP002317629 & JP 11 169814 A (CHUBU DENRYOKU KK) 29 juin 1999 (1999-06-29)

## Description

La présente invention est relative à un procédé de décontamination d'un matériau contenant du chrome hexavalent suivant lequel on soumet ce matériau à une lixiviation pour former une phase liquide et une phase solide.

Les matériaux contenant du chrome hexavalent peuvent présenter des problèmes relativement importants lors de leur utilisation, notamment par le fait que le chrome sous cette forme est très toxique et très soluble dans l'eau.

Ces problèmes existent, en particulier, pour des produits réfractaires au chrome devant servir dans la construction de fours à verre , de fours de cimenterie, de fours sidérurgiques, etc.

Le chrome est généralement présent dans de tels réfractaires sous forme d'oxyde de chrome à l'étage d'oxydation III. Sous cette forme, il est insoluble et considéré comme relativement peu toxique. Toutefois, sous certaines conditions opératoires, une partie du chrome trivalent peut être oxydé en chrome hexavalent qui, comme déjà mentionné ci-dessus est très soluble dont la toxicité est au contraire indéniable. Plusieurs auteurs attribuent la présence de chrome hexavalent dans les briques réfractaires usagées à la conjonction de deux conditions opératoires : la présence d'alcalins et/ou d'alcalino-terreux, comme par exemple calcium, potassium ou sodium, et une température de fonctionnement supérieure à 600 °C. On trouve donc du chrome hexavalent logiquement en grande quantité dans des briques provenant des industries du verre, de la sidérurgie et de la cimenterie dans lesquelles ces conditions sont rencontrées. Le produit contenant le chrome hexavalent n'est plus stable au-delà de 1050 °C, mais, en cas de refroidissement, il se forme à nouveau dans la gamme de température comprise entre 600 °C et 1000 °C et c'est ce chrome hexavalent que l'on retrouve à température ambiante.

Suite à sa toxicité et sa grande solubilité dans l'eau, le chrome hexavalent suscite de nombreuses craintes notamment dans l'optique d'une mise en décharge éventuelle. Au stade actuel, il existe donc un besoin impératif de solutions visant à pouvoir passiver le chrome au sein des matières usagées.

Différentes études ont été menées dans ce sens et plusieurs voies de traitement visant à remédier à ce problème ont été proposées parmi lesquelles :
- le traitement thermique en milieu réducteur (typiquement le coke) de matériaux préalablement broyés suivant lequel le chrome hexavalent peut être réduit par une cuisson à une température supérieure à 1050°C suivie d'un refroidissement sous vide ou sous atmosphère réductrice ;
- le procédé pyrométallurgique, suivant lequel on mélange des matières premières contaminées avec le minerai primitif du chrome, nommé chromite; dans ce cas, on procède à la fusion du mélange et à sa réduction jusqu'au chrome métallique ;
- le broyage sélectif des matière contaminées (principalement de type réfractaire) avec la tentative d'isoler le chrome hexavalent dans les fractions les plus fines.; de nombreuses institutions ont déjà des procédés de recyclage des réfractaires de magnésie-chrome ayant pour finalité de réutiliser les briques usagées pour la fabrication de nouveaux réfractaires.; on procède principalement par broyages successifs, séparations mécaniques et magnétiques, et ce, afin d'éliminer les substances contaminantes provenant de la mise en service des briques qui contiennent, en plus du chrome hexavalent, les produits en contact avec le réfractaire lors de sa mise en service comme, par exemple, métaux, verres, etc.
- le traitement par voie biochimique via l'utilisation de souches bactériennes.

Le document SU-A-881004 décrit l'élimination de chrome hexavalent d'une solution industrielle usagée en y ajoutant un agent réducteur. Le document JP-A-55167133 décrit un procédé dans lequel de la poudre d'alumine est ajoutée à une solution contenant du chrome hexavalent. Le traitement d'une boue contenant du chrome et des métaux lourds est décrit dans JP-A-53048906. Dans le document JP-A-11169814 des matériaux réfractaires contenant du chrome hexavalent sont chauffés dans une atmosphère exempte d'oxygène en présence d'un réducteur. US-A-4139460 décrit un procédé dans lequel une solution contenant du chrome hexavalent est chauffée à une température de l'ordre de 100°C. DE-A-10000709 divulgue un procédé dans lequel les matériaux contaminés sont traités dans un milieu alcalin.

Chacun de ces procédés connus souffre d'inconvénients majeurs. En effet :
- le procédé de traitement thermique ne permet pas de réduire la teneur en Cr⁶⁺ sous la limité fixée par la législation et, de plus, ne conduit pas à l'élimination du calcium et des alcalis de sorte que, si l'on se réfère par exemple à l'industrie réfractaire, les matériaux passivés ne pourront être réutilisés comme source de matière première secondaire qu'au risque d'une diminution sensible de la performance des produits; hormis leur influence néfaste sur le comportement réfractaire, le calcium et les alcalis vont accroître la cinétique d'oxydation du Cr³⁺ en Cr⁶⁺ provoquant un vieillissement prématuré des produits réfractaires issus de matières premières recyclées,
- le procédé de fusion nécessite des températures élevées et est donc peu rentable sur un plan énergétique; en outre, seul le chrome étant récupéré, il génère une quantité importante de résidus inutilisables;
- le broyage sélectif de matériaux associe les mêmes désavantages que le traitement thermique mais en les amplifiant;
- le traitement par voie biochimique n'est applicable que pour des concentrations en chrome faible au risque de provoquer l'élimination des souches de micro-organismes et se caractérise encore par une cinétique de réduction lente ainsi que par de faibles rendements, ce qui en limite l'attrait à la seule décontamination in situ des sols, pour laquelle les autres procédés s'avèrent inadaptés.

Tous les procédés qui, à ce jour, ont fait l'objet de la plus grande attention reposent globalement sur un même principe, à savoir que la substance contaminée est soumise à un traitement de lixiviation. Il s'agit d'un lavage de cette substance au cours duquel on obtient, d'une part, un résidu solide dont la teneur en chrome hexavalent est extrêmement réduite ou qui est sensiblement exempt de chrome hexavalent et, d'autre part, une solution contenant des chromates. Après ce lavage, il reste bien entendu encore à traiter cette solution contenant le chrome hexavalent.

L'invention a pour but de remédier aux inconvénients susmentionnés en proposant un procédé pour la réduction de chrome hexavalent tel que défini dans la revendication 1 qui présente les avantages suivants :
- pas d'élévation de température des solutions d'où gain énergétique significatif par rapport aux techniques de cuisson réductrice ou de pyrométallurgique;
- un rendement global à partir du conditionnement des matériaux contaminés à traiter jusqu'à leur mise en état de réutilisation qui est fortement amélioré par rapport à celui des procédés connus et qui est proche de 100 %, même pour des concentrations en chrome hexavalent très importantes de, par exemple, 575 ppm, ce qui permet de se situer dans les limites fixées par la législation en vigueur;
- une diminution considérable à la fois du rapport liquide/solide en lixiviation et également du temps de mise en contact entre la solution à base de chrome et un agent réducteur, jusqu'à, par exemple, 30 minutes sans qu'il y ait d'abaissement significatif du rendement;
- une large gamme de pH pour lequel une réduction totale du chrome hexavalent est obtenue;
- la possibilité d'utiliser des acides faibles tel que l'acide acétique, sans affecter l'efficacité du traitement;
- un grand potentiel de réduction si l'on compare notamment à d'autres agents réducteurs, comme le sulfate de fer, compte tenu du changement d'étage d'oxydation.

L'invention concerne notamment un procédé qui, grâce au rendement très élevé et l'utilisation d'un nombre réduit d'étapes successives très faciles à mettre en oeuvre, est extrêmement intéressant du point de vue technique et économique par rapport aux procédés connus.

De plus, il s'agit d'un procédé qui peut être appliqué sur des matériaux très variés contaminés par du chrome hexavalent.

A cet effet, suivant l'invention, on effectue la lixiviation dans un milieu acide en présence d'un agent réducteur, d'une manière telle à transformer du chrome hexavalent en chrome trivalent en solution, et on augmente ensuite le pH jusqu'à former de l'hydroxyde de chrome à l'état solide.

Avantageusement, on règle le pH lors de la lixiviation à une valeur de 1 à 6,5, de préférence de l'ordre de 4.

Suivant une forme de réalisation intéressante, on utilise, comme agent réducteur, un résidu de bains de fixation photographique usagé contenant des ions thiosulfates.

L'utilisation d'une solution ou d'une suspension de bains de fixation usagés est très intéressante étant donné que ces bains constituent des déchets nécessitant normalement un traitement très coûteux.

D'une manière particulièrement intéressante, on ajoute un floculant à l'hydroxyde de chrome trivalent et ensuite on sépare par filtration, d'une part, une phase solide contenant de l'hydroxyde de chrome trivalent et, d'autre part, une solution résiduelle contenant des alcalis.

Suivant une forme de réalisation très efficace, lorsque l'agent réducteur susmentionné comprend des thiosulfates, ceux-ci sont ajoutés à l'eau de lixiviation sous forme d'une solution provenant de bains de fixation photographique usagés présentant une teneur en thiosulfate comprise entre 4 et 15% en poids, cette solution de bain de fixation étant ajoutée à l'eau de lixiviation contenant du chrome hexavalent dans une proportion de l'ordre de 1 à 5

Suivant une forme de réalisation préférentielle, on soumet des granules ayant une granulométrie inférieure à 6 mm, de préférence inférieure à 4 mm, à la lixiviation précitée.

Le procédé de l'invention permet de fournir une matière de base pour la préparation d'un produit, notamment d'un produit réfractaire, qui est obtenue par la mise en oeuvre du procédé tel que décrit ci-dessus.

D'autres détails et particularités de l'invention ressortiront de la description donnée, ci-après, à titre d'exemple non limitatif, de quelques formes de réalisation particulières du procédé, suivant l'invention, avec référence aux dessins annexés et à l'utilisation de réducteurs de provenances très particulières.
La figure 1 est une représentation schématique des différentes étapes du procédé utilisant, comme agent réducteur, des bains photographiques, suivant l'invention.
La figure 2 est une représentation schématique des différentes étapes du procédé, suivant l'invention, dans lequel on utilise, comme agent réducteur, de la poudre de zinc.
La figure 3 est une représentation schématique d'une autre forme de réalisation du procédé suivant l'invention dans laquelle la réduction est obtenue par l'utilisation de plaques de zinc

D'une façon générale le procédé, suivant l'invention, pour le traitement de matériaux contaminés au chrome hexavalent, préférentiellement de type réfractaire, consiste à désagréger ou à broyer ces matériaux et à soumettre les granules ainsi obtenus à un traitement de lixiviation en milieu aqueux acide en présence d'un agent réducteur dans des conditions qui sont telles à former une solution contenant pratiquement tout le chrome hexavalent de ces granules. La désagrégation et le broyage susdits peuvent avoir lieu soit séparément à sec ou en voie liquide soit dans le liquide de lixiviation. Le choix d'une des variantes dépend en partie de la nature des matériaux à traiter.

Il est important, suivant l'invention, que, dans un premier stade, l'acidité du liquide de lixiviation soit telle pour que le chrome trivalent obtenu par la présence de l'agent réducteur puisse être maintenu en solution dans ce liquide et, dans un second stade, le pH de ce liquide soit augmenté par l'addition d'une base comme par exemple du NaOH, NH₄OH, etc...d'une manière telle à permettre après cristallisation de le séparer par des moyens techniquement simples qui sont généralement connus en soi, comme une filtration.

De très bons résultats ont été obtenus en séparant, préalablement à l'augmentation du pH, la phase solide du liquide de lixiviation. Ceci permet, en effet, de former une suspension de particules cristallisées d'hydroxyde de chrome de dimensions sensiblement uniformes qui peuvent facilement être isolées, surtout lorsque l'on ajoute au liquide de lixiviation un floculant.

Le procédé, suivant l'invention, est surtout très utile pour la décontamination de matériaux relativement poreux, comme c'est généralement le cas pour des matériaux réfractaires. La plupart de ces matériaux présentent, en effet, une porosité de l'ordre de 10-20% Ce qui a pour conséquence que, lors d'une lixiviation à l'eau non acidifiée, et sans agent réducteur, la phase solide séparée de l'eau de lixiviation contiendra encore nécessairement une quantité relativement importante de chrome. Par contre, en menant , suivant l'invention, simultanément la lixiviation et la réduction en milieu acide, on obtient le très bon rendement du procédé généralement supérieur à 99,5%, comparé à celui des procédés connus.

Un autre avantage non négligeable du procédé, suivant l'invention, est qu'il ne concerne non seulement des opérations techniquement simples qui chacune ont un rendement élevé, mais que le nombre d'opérations successives à partir de la formation des granules du matériau à décontaminer jusqu'à l'obtention de la matière de base pouvant être utilisée pour la fabrication de nouveaux produits industriellement valables est très réduit. De plus, chacune de ces opérations a une influence favorable sur les opérations suivantes.

Le cas échéant, si nécessaire, on peut bien entendu prévoir plusieurs lixiviations successives. Il a, toutefois, été constaté que, même avec une seule lixiviation pour des matériaux fortement contaminés par du chrome hexavalent, on parvient à obtenir un rendement extrêmement élevé, comme déjà mentionné ci-dessus.

Pour la préparation d'une matière de base destinée à la fabrication de briques réfractaires, il est souvent à conseiller de soumettre à la lixiviation des matériaux broyés ou désagrégés contenant relativement peu de fines particules, tout en évitant au maximum d'utiliser des granules d'un diamètre supérieur à 5 mm.

L'invention est également relative à l'utilisation de déchets, constituant des substances à recycler, pour la réduction du chrome hexavalent.

Ces déchets, utilisés comme agents réducteurs; qui trouvent ainsi une voie de valorisation, consistent en:
- des bains de fixation photographique usagés qui se caractérisent par des teneurs en thiosulfate typiquement comprises entre 4 et 15 % en poids de la solution ; ou
- des poudres à forte teneur en zinc telles que celles récupérées lors des procédés de métallisation thermique, contenant de l'ordre de 85 % en poids de zinc. Dans ce cas, le zinc se présente sous la forme d'une poudre ayant une granulométrie moyenne (D₅₀) typiquement de l'ordre de 80 µm. Le zinc s'avère cependant aussi efficace avec des granulométries très fines.

Spécifiquement pour la poudre de zinc, il n'est pas nécessaire d'appliquer une agitation vigoureuse, la seule restriction étant de maintenir la poudre de zinc en suspension de sorte à assurer l'homogénéité du milieu.

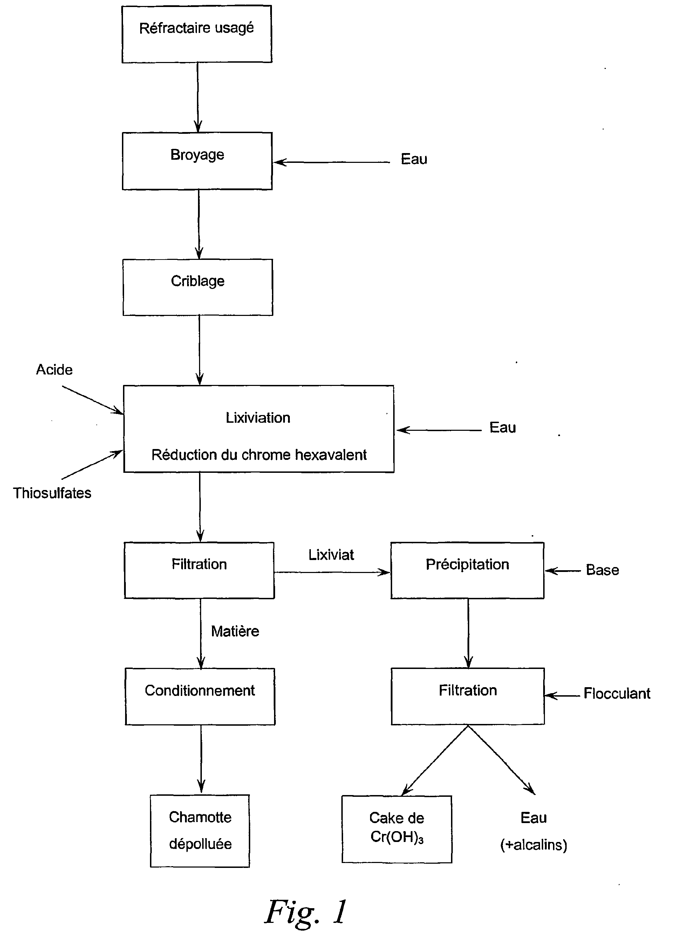

La figure 1 représente schématiquement les différentes étapes d'une première forme de réalisation du procédé, suivant l'invention, pour le traitement du chrome hexavalent présent dans des matériaux réfractaires usagés. Suivant cette forme de réalisation, les matériaux réfractaires sont soumis à un broyage sous l'ajout d'eau jusqu'à l'obtention d'une fraction de granules avec une granulométrie inférieure à 4 mm. Cette fraction est ensuite soumise à un traitement de lixiviation en milieu aqueux suivant lequel l'on ajoute de l'eau en quantité suffisante à ladite fraction afin de faire une extraction approfondie du chrome hexavalent contenu dans ces granules en mettant ce chrome en solution. De plus, suivant l'invention, on effectue cette lixiviation dans un milieu acide en présence d'un agent réducteur.

Une fraction solide contenant les granules exempts de chrome hexavalent est alors séparée par filtration du liquide de lixiviation contenant du chrome trivalent, du calcium et des alcalis en solution. Après séchage et, éventuellement, conditionnement, par exemple, par broyage et criblage de cette fraction solide, on obtient de la chamotte qui ne contient pratiquement pas de chrome hexavalent, de calcium ou d'alcalis, de sorte que celle-ci peut alors être réutilisée dans, par exemple, des matériaux réfractaires.

Pour former le milieu acide précité, un acide et le contenu d'un bain de fixation photographique usagé sont ajoutés à l'eau de lixiviation. Au moyen de l'acide, le pH de la solution est abaissé à une valeur entre 1 et 6,5. Cet acide comprend, par exemple, de l'acide sulfurique ou de l'acide acétique. Afin de limiter l'utilisation des acides, le pH est préférentiellement maintenu entre 4 et 6,5. On a constaté que le rendement de la réduction du chrome hexavalent en chrome trivalent n'est pratiquement pas influencé par le pH dans les limites citées.

Le bain de fixation contenant entre 4 et 15 % en poids de thiosulfate est ajouté à l'eau de lixiviation dans une proportion entre 1/10 et 2/5, et de préférence dans une proportion de l'ordre de 1/5. Après environ 30 minutes, et au maximum 90 minutes, pratiquement tout le chrome hexavalent a été réduit en chrome trivalent en solution.

Une base, comme de l'hydroxyde de sodium, est alors ajoutée à la phase liquide, après la séparation de la phase solide par filtration, afin d'augmenter le pH à une valeur entre 9 et 10 pour former une suspension contenant l'hydroxyde de chrome trivalent. Ensuite, un floculant, connu par l'homme du métier, est ajouté à cette suspension et cette dernière est alors filtrée afin de séparer un gâteau, contenant l'hydroxyde de chrome trivalent, de l'eau dans laquelle sont présents des alcalis et du calcium.

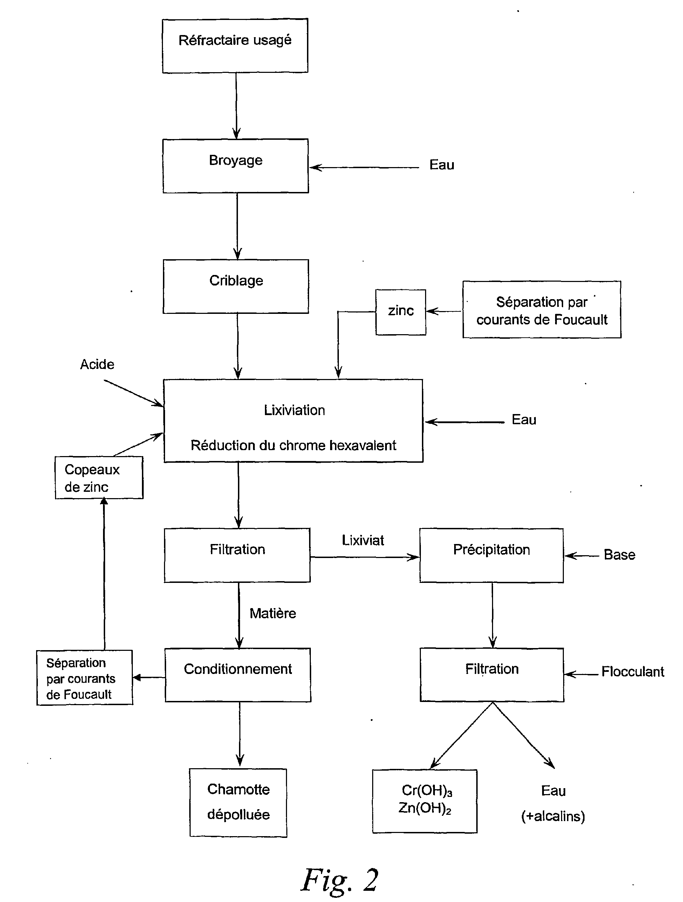

A la figure 2 sont représentées schématiquement les différentes étapes d'une deuxième forme de réalisation du procédé suivant l'invention. Cette forme de réalisation est différente de celle de la figure 1 par le fait que l'on fait usage d'une poudre métallique à forte teneur en zinc, au lieu du bain de fixation photographique, comme agent réducteur. Le zinc n'ayant pas réagi est séparé de la fraction solide décontaminée par courants de Foucault. La poudre de zinc ainsi récupérée peut alors être réutilisée comme agent réducteur.

Après l'ajout d'un floculant, un précipité d'hydroxyde de chrome trivalent est séparé par filtration de l'eau, contenant des alcalis.

L'utilisation de courants de Foucault pour séparer la poudre de zinc recyclable est surtout efficace si cette poudre présente une granulométrie supérieure à 5 mm, comme c'est le cas, par exemple, de copeaux.

Le zinc métallique qui est ainsi récupéré peut être réutilisé pour la réduction du chrome hexavalent.

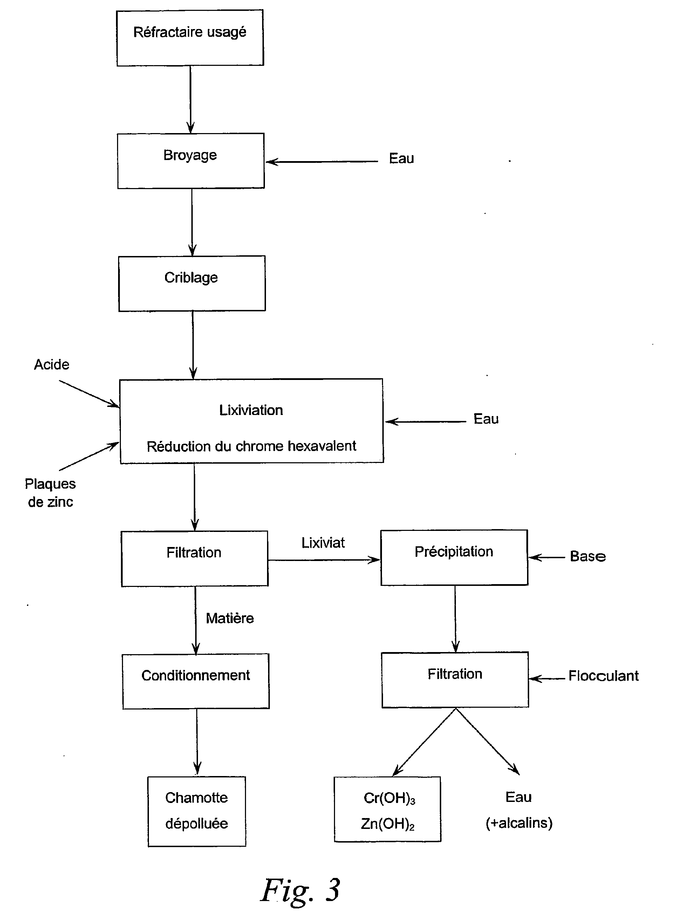

La figure 3 est un schéma d'une forme de réalisation du procédé, suivant l'invention, qui prend en compte l'utilisation de plaques de zinc en lieu et place du bain photographique ou de la poudre de zinc. Suivant cette forme de réalisation, les plaques de zinc sont plongées dans le liquide de lixiviation contenant du chrome hexavalent et différents alcalins, conduisant alors à la réduction du chrome hexavalent en chrome trivalent. A ce liquide de lixiviation, on ajoute également un acide en quantité suffisante pour maintenir le chrome trivalent ainsi formé en solution. Cette technique présente l'avantage de permettre de séparer facilement le zinc n'ayant pas réagi des granules soumis à la lixiviation.

Par comparaison des différentes formes de réalisation décrites ci-avant, on constate que l'utilisation de bains photographiques présente l'avantage de pouvoir réaliser séquentiellement la réduction du Cr⁶⁺ et la précipitation de l'hydroxyde de chrome trivalent, ce qui permet de simplifier considérablement le procédé. Par contre, dans le cas d'une réduction par de la poudre métallique constituée de zinc, il est nécessaire, après l'étape de filtration des granules de récupérer cette poudre de Zn, soit d'éliminer celle-ci en fin de procédé via une technique de séparation par courants de Foucault. Cette dernière technique a un caractère plus restrictif puisqu'elle ne pourra être envisagée avec un rendement industriellement favorable qu'à la condition d'utiliser des poudres de zinc de granulométrie plus grossière, typiquement supérieure à 5 millimètres.

Généralement, le rapport solide/liquide lors de la lixiviation et la taille des granules des matériaux à décontaminer soumis à la lixiviation ont une influence relativement importante sur le rendement du procédé.

Les rendements des différentes étapes du procédé sont définis de la manière suivante :

Rendement de lixiviation : il est défini par le rapport de la quantité de chrome hexavalent mesurée dans l'éluat sur la somme totale des teneurs en chrome hexavalent des trois éluats qui résultent des trois lixiviations successives selon la norme.

Rendement de réduction : il est défini par le rapport de la quantité de chrome hexavalent mesurée dans l'éluat issu de la réduction du chrome hexavalent en chrome trivalent et après précipitation et filtration du chrome trivalent, sur la quantité de chrome hexavalent mesurée dans l'éluat de la lixiviation.

Rendement du procédé de décontamination est donc défini par le rendement de réduction calculé à partir de la somme totale des teneurs en chrome hexavalent des trois éluats qui résultent des trois lixiviations successives selon la norme.

Par "éluat" on entend le liquide provenant de la lixiviation.

### Exemple 1

Cet exemple est une application du procédé à une matière réfractaire usagée suivant la forme de réalisation décrite en figure 1. Le matériau à traiter se présente sous forme de parallélépipèdes de dimensions 200x150x100 mm3.

Dans cet exemple, l'essai est réalisé sur un prélèvement de matière sèche de masse: 1000 g.

### Conditionnement de la matière usagée:

- réduction par concassage à sec en fragments de dimensions inférieures à 60 mm. Réduction en granules des concassés par broyage en voie liquide : le rapport matière/eau était égal à 1/10, une granulométrie moyenne atteinte D₅₀ = 200 µm. après 1 heure de broyage.
- une fraction du liquide de broyage est prélevée pour analyse ICP des espèces contenues dans ce dernier: Cr⁶⁺ = 575 mg/l
   Na⁺ = 941 mg/l
   K⁺ = 54 mg/l
   Cₐ²⁺ = 32 mg/l
   Mg²⁺ = 3 mg/l

### Réaction de réduction du chrome hexavalent :

- Ajout du bain photographique Na₂S₂O₃ (2 mol/l): 1/5 du volume d'eau de broyage, soient 2000 ml,
- Ajout d'acide sulfurique pour abaisser le pH aux environs de 3 pour se mettre dans des conditions où la réduction peut s'opérer.
- 90 minutes de réduction sous agitation.

### Séparation de la matière réfractaire :

- La matière réfractaire sensiblement exempte de chrome trivalent est séparée par filtration.

### Réaction de précipitation du chrome trivalent :

- Le pH est alors ajusté à 10 grâce à l'ajout de NaOH (10 M), valeur favorable à la précipitation de l'hydroxyde de chrome.

### Séparation du précipité :

- Après ajout d'un floculant puis filtration de la suspension basique, on obtient un précipité d'hydroxyde de chrome III, et une solution contenant les alcalins et des traces de chrome hexavalent n'ayant pas été réduit: Cr⁶⁺ = 0,15 mg/l.

Le rendement du procédé appliqué dans cet exemple est alors de 99.95 %.

### Exemple 2

Cet exemple est basé sur la figure 2.

Pour la réaction de réduction du chrome hexavalent décrite dans l'exemple 1, l'agent réducteur utilisé dans cet exemple est un résidu de métallisation contenant du zinc en lieu et place des ions thiosulfates.

Dans cet exemple, l'essai est réalisé sur un prélèvement de matière sèche de masse: 1000 g

### Conditionnement de la matière usagée: voir exemple 1.

### Réaction de réduction du chrome hexavalent :

- La poudre métallique contenant du zinc est ajoutée au liquide de broyage en large excès: 400 g pour 101 1 de solution.
- La rotation d'un module d'agitation permet de maintenir en suspension les particules de zinc et les granules.
- Ajout d'acide sulfurique pour abaisser le pH aux environs de 3 pour se mettre dans des conditions où la réduction peut s'opérer.

### Séparation de la matière réfractaire:

- Filtration permettant d'isoler les granules décontaminés et le zinc à séparer par courant Foucault

### Réaction de précipitation du chrome trivalent :

- Après 90 minutes de réduction sous agitation, le pH de la solution résultant de la filtration est alors ajusté à 10 grâce à l'ajout de NaOH (10 M), valeur favorable à la précipitation de l'hydroxyde de chrome.

La solution contient les alcalins et des traces de chrome hexavalent n'ayant pas été réduit: Cr⁶⁺ = 0,25 mg/l.

Le rendement du procédé appliqué dans cet exemple est alors de 99,90 %.

### Exemple 3

Ce troisième exemple illustre la plage de pH envisageable pour la réduction du chrome hexavalent. L'utilisation d'un milieu fort acide dans un procédé peut, en effet, constituer un gros désavantage et la possibilité d'adoucir les conditions opératoires présente des intérêts évidents.

Cet exemple reprend dans sa globalité les éléments décrits dans l'exemple 1.

Dans ces conditions, on a utilisé comme réducteur du thiosulfate provenant d'un bain photographique qui a été mis en large excès par rapport à la stoechiométrie.

Lors de l'étape de réduction à proprement parler, le pH a été ajusté au moyen d'acide sulfurique jusqu'à la valeur souhaitée. Deux valeurs extrêmes de pH ont ainsi été choisies : 2,5 et 6,5. Au cours de l'acidification de la solution, la coloration verdâtre caractéristique de la réduction du chrome hexavalent en chrome trivalent est apparue dès les pH inférieurs à 7.

Après avoir laissé la solution sous agitation pendant un temps suffisamment long, en particulier 90 minutes, de manière à éliminer tout effet dû à la cinétique de réduction et avoir filtré la fraction solide, le pH a alors été ajusté au moyen de NaOH (10M) jusqu'à atteindre la valeur de 10, propice à la précipitation de l'hydroxyde de chrome.

Après filtration et récupération de cet hydroxyde insoluble, un nouveau dosage par ICP du chrome résiduel est effectué. Les résultats de ces deux essais de réduction conduisent à des solutions ne contenant plus que 0,2 mg/l et 0,9 mg/l de Cr respectivement pour les essais réalisés à pH 2,5 et 6,5 , soit un rendement supérieur à 99,8 %.

### Exemple 4

Cet exemple démontre que l'utilisation d'un acide plus faible, comme par exemple l'acide acétique, en lieu et place de l'acide sulfurique, conduit à des résultats équivalents.

Cet exemple reprend dans sa globalité les éléments décrits dans l'exemple 1.

Pour un test réalisé avec le bain fixateur photographique, la teneur en chrome dans le liquide de lixiviation a été abaissée à 2 mg/l contre 1,1 mg/l avec l'acide sulfurique.

En ce qui concerne la poudre métallique contenant du zinc, le résultat était encore meilleur puisque la concentration en chrome n'était plus que de 0,5 mg/l contre 0,25 mg/l avec l'utilisation de l'acide sulfurique.

### Exemple 5

Les essais décrits ci-avant étaient relativement longs avec, par exemple 90 minutes de temps de séjour pendant l'étape de réduction. Dans cet exemple, on a réalisé un test pendant un temps plus court afin de démontrer que la réduction chimique du chrome hexavalent était relativement rapide.

Pour ce faire, la procédure de l'exemple 4, qui consiste à utiliser, d'une part, le bain fixateur comme agent réducteur et, d'autre part, l'acide acétique a été suivie mais, cette fois-ci, la solution n'a été laissée en milieu acide qu'une demi-heure au lieu de 90 minutes.

In fine, on a obtenu une solution avec une teneur de 1,1 mg/l de chrome hexavalent soit un résultat similaire à celui obtenu auparavant.

### Exemple 6 :

La chamotte réfractaire constituée de la phase solide issue du procédé de décontamination suivant l'exemple 1 est utilisée ici en tant que nouvelle matière de base pour la fabrication de produits réfractaire sous forme de brique ou de béton.

Les formulations de matériaux réfractaires présentés dans cet exemple s'appuient sur la construction d'une distribution granulométrique à partir des granules d'oxyde de chrome décontaminés, et qui est constituée de sept classes allant de 0 à 3 mm.

La brique est mise en forme par pressage uniaxial (P=124MPa) puis traitée à 1550°C.

Le béton est mis en forme par coulage puis traité à 1550°C.

| Matériau | **Matière** | **Teneur massique** | **Densité/porosité** | σ**c (MPa)** |
|---|---|---|---|---|
| **Brique** | **Cr₂O₃** | 77% | 3.40/17% | 167 |
| | 0-100 µm | 10 | | |
| | 100-250 µm | 11 | | |
| | 250-500 µtm | 12 | | |
| | 500-1000 µm | 15 | | |
| | 1000-1500 µm | 10 | | |
| | 1500-2000 µm | 8 | | |
| | 2000-3000 µm | 11 | | |
| | **Al₂O₃** | 23% | | |
| **Béton** | **Cr₂O₃** | 68% | | |
| | 0-100 µm | 20 | 3.8/14% | 65 |
| | 100-250 µm | 15 | | |
| | 250-500 µm | 7 | | |
| | 500-1000 µm | 5 | | |
| | 1000-1500 µm | 5 | | |
| | 1500-2000 µm | 5 | | |
| | 2000-3000 µm | 10 | | |
| | **Al₂O₃** | 30% | | |
| | **Ciment Al₂O₃ (71 %)** | 2% | | |
| | **Eau** | 3% | | |

En conclusion, l'invention est donc relative (a) à un procédé de traitement de matériaux contaminés par du chrome hexavalent, en particulier des matériaux réfractaires de chrome usagés, dans lequel on effectue une lixiviation et une réduction chimique en milieu acide avantageusement au moyen de déchets contenant soit des thiosulfates soit du zinc, et ce en un temps relativement court tout en obtenant des rendements tout à fait satisfaisants, et (b) à une matière de base obtenue suivant ce procédé pour la fabrication de produits réfractaires notamment sous forme de brique ou de béton.

Dans ce procédé on utilise préférentiellement, comme agent réducteur, des bains de fixation photographiques présentant des teneurs en thiosulfate comprises entre 4 et 15 % en masse ou une poudre métallique contenant du zinc issue d'un procédé de métallisation thermique et présentant une granulométrie moyenne (D₅₀) comprise entre 50 et 500 µm, et préférentiellement voisine de 80 µm.

Lorsque l'on utilise des thiosulfates, la présente invention couvre la réalisation de la lixiviation, de la réduction et de la précipitation de l'hydroxyde de chrome de manière séquentielle sans qu'il soit nécessaire de séparer au préalable la matière traitée du liquide de lixiviation. Au contraire, spécifiquement pour le cas de la réduction par de la poudre métallique, on recommande une étape de filtration préalable de manière à :
1°) obtenir au départ de l'éluat et après précipitation, un composé constitué en majorité de l'hydroxyde de chrome trivalent et à
2°) pouvoir récupérer la matière traitée et le zinc, n'ayant pas réagi, pour une utilisation ultérieure du zinc en tant qu'agent réducteur.

L'acide utilisé pour réaliser la réduction du chrome hexavalent avec ledit réducteur peut être indifféremment un acide fort, tel que l'acide sulfurique, ou un acide faible, tel que l'acide acétique. Ainsi, le pH de réduction est compris entre 1 et 6,5 et, préférentiellement entre 4 et 6,5 et le pH de précipitation entre 9 et 11 est obtenu par addition d'une base, NaOH par exemple.

Le choix d'une des variantes du procédé suivant l'invention est notamment fonction de la nature des matériaux à décontaminer et peut facilement être effectué sur base d'essais éventuellement à l'échelle de laboratoire sans que ceci exige, pour l'homme de l'art, une activité inventive.

Il est bien entendu que la présente invention n'est pas limitée aux différentes formes de réalisation décrites ci-dessus et illustrées par les figures annexées, mais que bien d'autres variantes peuvent être envisagées sans sortir du cadre de la présente invention.

C'est ainsi que, dans certains cas, la filtration peut être remplacée par des techniques équivalentes telles que criblage ou cyclonage. Il en est de même pour le choix des acides et des agents réducteurs à utiliser qui peuvent par exemple varier en fonction de la nature des matériaux à décontaminer.

## Revendications

1. Procédé de décontamination par voie liquide d'un matériau réfractaire poreux contenant du chrome hexavalent suivant lequel on soumet ce matériau à une lixiviation pour former une phase liquide et une phase solide, **caractérisé en ce que** l'on effectue la lixiviation dans un milieu acide en présence d'un agent réducteur d'une manière telle à transformer du chrome hexavalent en chrome trivalent en solution et à ce que l'on augmente le pH jusqu'à former de l'hydroxyde de chrome à l'état solide.

2. Procédé suivant la revendication 1, **caractérisé en ce que** l'on règle le pH lors de la lixiviation à une valeur de 1 à 6,5, de préférence voisine de 4.

3. Procédé suivant l'une ou l'autre des revendications 1 ou 2, **caractérisé en ce que** l'on utilise un agent réducteur contenant des ions thiosulphates ou du zinc.

4. Procédé suivant la revendication 3, **caractérisé en ce que** l'on utilise comme agent réducteur un résidu de bains de fixation photographique usagé contenant des ions thiosulphates.

5. Procédé suivant la revendication 3, **caractérisé en ce que** l'on utilise du zinc comme agent réducteur se présentant sous forme de poudre dont la granulométrie moyenne (D50) est comprise entre 50 et 500 µm, de préférence entre 50 et 150. µm.

6. Procédé suivant la revendication 3, **caractérisé en ce que** l'on utilise du zinc comme agent réducteur se présentant sous forme de fragments dont la granulométrie (D50) est comprise entre 2 et 8 mm, de préférence entre 4 et 6 mm.

7. Procédé suivant la revendication 3, **caractérisé en ce que** l'on utilise du zinc comme agent réducteur se présentant sous forme de plaques dont les dimensions sont telles à pouvoir les immerger au moins partiellement dans le liquide de lixiviation et les séparer de ce dernier et de la phase solide du matériau décontaminé par voie physique.

8. Procédé suivant l'une ou l'autre des revendications 5 ou 6, **caractérisé en ce que** les fragments de zinc n'ayant pas réagi sont séparés par courants de Foucault.

9. Procédé suivant l'une quelconque des revendications 1 à 6, **caractérisé en ce que** les phases solide et liquide sont séparées l'une de l'autre par voie physique telle que par exemple filtration, criblage, cyclonage.

10. Procédé suivant l'une quelconque des revendications 1 à 9, **caractérisé en ce que**, après la transformation du chrome hexavalent en chrome trivalent en solution, on amène le pH dans la phase liquide à un pH de 8 à 11, de préférence de 9 à 10..

11. Procédé suivant l'une quelconque des revendications 1 à 10, **caractérisé en ce que**, avant d'augmenter le pH, on sépare la phase liquide de la phase solide obtenue lors de la lixiviation.

12. Procédé suivant l'une quelconque des revendications 1 à 11, **caractérisé en ce que** l'on ajoute un floculant à l'hydroxyde de chrome trivalent et à ce que l'on procède ensuite à une filtration de manière à séparer une phase solide contenant cet hydroxyde d'une solution résiduelle contenant des alcalins.

13. Procédé suivant la revendication 12, **caractérisé en ce que** l'on ajoute à la solution résiduelle précitée du chlorure de calcium, de manière à précipiter du sulfate sous forme de gypse.

14. Procédé suivant l'une quelconque des revendications 1 à 13, **caractérisé en ce que** l'on soumet un matériau se présentant sous forme de granulats ayant une granulométrie inférieure à 6 mm, de préférence inférieure à 4 mm, à la lixiviation précitée.

15. Procédé suivant l'une quelconque des revendications 1 à 14, **caractérisé en ce que** l'on prépare le matériau à traiter par broyage en voie liquide éventuellement précédé par un concassage à sec.

16. Procédé suivant la revendication 15, **caractérisé en ce que** l'on réalise le broyage dans un milieu acide en présence d'un agent réducteur.

17. Procédé suivant l'une quelconque des revendications 1 à 16, **caractérisé en ce que** l'on soumet un matériau réfractaire usagé contaminé par du chrome hexavalent à la lixiviation précitée.

## Claims

1. Method for decontaminating a porous refractory material containing hexavalent chromium using a liquid, according to which said material is subjected to lixiviation to form a liquid phase and a solid phase, **characterised in that** the lixiviation is carried out in an acidic environment in the presence of a reducing agent in such a way that hexavalent chromium is converted to the trivalent form in solution, and that the pH is raised until solid chromium hydroxide precipitates out.

2. Method according to claim 1, **characterised in that** the pH during lixiviation is adjusted to between 1 and 6.5, preferably close to 4.

3. Method according to either claim 1 or claim 2, **characterised in that** a reducing agent containing either thiosulphate ion or zinc is used.

4. Method according to claim 3, **characterised in that** the reducing agent used is a residue of used photographic fixative baths containing thiosulphate ions.

5. Method according to claim 3, **characterised in that** zinc is used as the reducing agent, in the form of a powder in which the mean particle size (D₅₀) is between 50 and 500 µm, preferably between, 50 and 150 µm.

6. Method according to claim 3, **characterised in that** zinc is used as the reducing agent, in the form of fragments with a mean particle size (D₅₀) of between 2 and 8 mm, preferably between 4 and 6 mm.

7. Method according to claim 3, **characterised in that** zinc is used as the reducing agent, in the form of plates with dimensions such that they can be submerged-at least partially-in the lixiviation fluid and separated from the latter and from the solid phase of the material decontaminated using physical modalities.

8. Method according to either claim 5 or claim 6, **characterised in that** unreacted zinc fragments are separated using Foucault currents.

9. Method according to any of claims 1 to 6, **characterised in that** the solid and liquid phases are separated from one another by physical modalities such as filtration, sieving or centrifugation.

10. Method according to any of claims 1 to 9, **characterised in that**, after the conversion of hexavalent chromium into the trivalent form in solution, the pH of the liquid is raised to 8-11, preferably 9-10.

11. Method according to any of claims 1 to 10, **characterised in that**, before the pH is raised, the solid and liquid phases generated during lixiviation are separated.

12. Method according to any of claims 1 to 11, **characterised in that**, a flocculant is added to the chromium III hydroxide followed by filtration to separate out a solid phase containing said hydroxide from a residual solution containing alkali metals.

13. Method according to claim 12, **characterised in that** calcium chloride is added to the above-mentioned residual solution, in such a way as to induce precipitation of sulphate in the form of gypsum.

14. Method according to any of claims 1 to 13, **characterised in that** a material in the form of particles with a size of less than 6 mm, preferably less than 4 mm, is subjected to the above-mentioned lixiviation step.

15. Method according to any of claims 1 to 14, **characterised in that** the material to be treated is prepared by crushing in liquid, possibly preceded by dry milling.

16. Method according to claim 15, **characterised in that** the crushing is carried out in acidic environment in the presence of a reducing agent.

17. Method according to any of claims 1 to 16, **characterised in that** a used refractory material contaminated with hexavalent chromium is subjected to the above-mentioned lixiviation step.

## Patentansprüche

1. Verfahren zur Flüssig-Dekontamination eines porösen feuerfesten Materials, das sechswertiges Chrom enthält, wobei dieses Material einer Auslaugung unterzogen wird, um eine flüssige Phase und eine feste Phase zu bilden, **dadurch gekennzeichnet, dass** die Auslaugung in einem sauren Milieu in Gegenwart eines Reduktionsmittels erfolgt, derart, dass sechswertiges Chrom in dreiwertiges Chrom in Lösung umgewandelt wird und dass der pH erhöht wird, bis sich Chromhydroxid in festem Zustand bildet.

2. Verfahren nach Anspruch 1, **dadurch gekennzeichnet, dass** der pH bei der Auslaugung auf einen Wert von 1 bis 6,5, vorzugsweise nahe 4, eingestellt wird.

3. Verfahren nach einem der Ansprüche 1 oder 2, **dadurch gekennzeichnet, dass** ein Reduktionsmittel verwendet wird, das Thiosulfat-Ionen oder Zink enthält.

4. Verfahren nach Anspruch 3, **dadurch gekennzeichnet, dass** als Reduktionsmittel ein gebrauchter Rückstand von fotografischen Fixierbädern verwendet wird, der Thiosulfat-Ionen enthält.

5. Verfahren nach Anspruch 3, **dadurch gekennzeichnet, dass** als Reduktionsmittel Zink verwendet wird, das in Form eines Pulvers vorliegt, dessen durchschnittliche Korngröße (D50) zwischen 50 und 500 µm, vorzugsweise zwischen 50 und 150 µm, beträgt.

6. Verfahren nach Anspruch 3, **dadurch gekennzeichnet, dass** als Reduktionsmittel Zink verwendet wird, das in Form von Bruchstücken vorliegt, deren Korngröße (D50) zwischen 2 und 8 mm, vorzugsweise zwischen 4 und 6 mm, beträgt.

7. Verfahren nach Anspruch 3, **dadurch gekennzeichnet, dass** als Reduktionsmittel Zink verwendet wird, das in Form von Platten vorliegt, deren Abmessungen derart sind, dass sie mindestens teilweise in die Auslaugungsflüssigkeit getaucht werden können und dass sie von der Letztgenannten und der festen Phase des dekontaminierten Materials auf physikalischem Weg getrennt werden können.

8. Verfahren nach einem der Ansprüche 5 oder 6, **dadurch gekennzeichnet, dass** die Zinkbruchstücke, die nicht reagiert haben, durch Foucaultsche Ströme abgeschieden werden.

9. Verfahren nach einem der Ansprüche 1 bis 6, **dadurch gekennzeichnet, dass** die feste und die flüssige Phase auf physikalischem Weg voneinander getrennt werden, wie beispielsweise durch Filtration, Sieben, Zyklonieren.

10. Verfahren nach einem der Ansprüche 1 bis 9, **dadurch gekennzeichnet, dass** nach der Umwandlung des sechswertigen Chroms in dreiwertiges Chrom in Lösung der pH in der flüssigen Phase auf einen pH von 8 bis 11, vorzugsweise von 9 bis 10, gebracht wird.

11. Verfahren nach einem der Ansprüche 1 bis 10, **dadurch gekennzeichnet, dass** vor der Erhöhung des pH die flüssige Phase von der bei der Auslaugung erzielten festen Phase getrennt wird.

12. Verfahren nach einem der Ansprüche 1 bis 11, **dadurch gekennzeichnet, dass** ein Flockungsmittel dem Hydroxid von dreiwertigem Chrom zugesetzt wird und dass anschließend eine Filtration vorgenommen wird, um eine feste Phase, die dieses Hydroxid enthält, von einer Restlösung zu trennen, die Alkalien enthält.

13. Verfahren nach Anspruch 12, **dadurch gekennzeichnet, dass** der ausgefällten Restlösung Calciumchlorid zugesetzt wird, um Sulfat in Form von Gips auszufällen.

14. Verfahren nach einem der Ansprüche 1 bis 13, **dadurch gekennzeichnet, dass** ein Material, das in Form von Granulat mit einer Korngröße von unter 6 mm, vorzugsweise unter 4 mm, vorliegt, der oben genannten Auslaugung unterzogen wird.

15. Verfahren nach einem der Ansprüche 1 bis 14, **dadurch gekennzeichnet, dass** das zu behandelnde Material durch Nassmahlen vorbereitet wird, wovor eventuell ein trockener Brechvorgang durchgeführt wird.

16. Verfahren nach Anspruch 15, **dadurch gekennzeichnet, dass** der Mahlvorgang in einem sauren Milieu in Gegenwart eines Reduktionsmittels durchgeführt wird.

17. Verfahren nach einem der Ansprüche 1 bis 16, **dadurch gekennzeichnet, dass** ein verbrauchtes feuerfestes Material, das mit sechswertigem Chrom kontaminiert ist, der oben genannten Auslaugung unterzogen wird.
